# EUROPEAN PATENT APPLICATION

(11) **EP 3 065 080 A1**
(43) Date of publication of application: **07.09.2016**
(21) Application number: 15201009.6
(22) Date of filing: 18.12.2015
(51) Int. Cl.: G06K 9/00, B07C 3/14

(54) **DELIVERY PROCESSOR AND COMPUTER READABLE STORAGE MEDIUM**

(30) Priority: 03.03.2015 JP 2015041289
(71) Applicant: Kabushiki Kaisha Toshiba, Minato-ku Tokyo 105-8001 (JP)
(72) Inventor: Piao, Ying, Tokyo, Tokyo 105-8001 (JP); Hamamura, Tomoyuki, Tokyo, Tokyo 105-8001 (JP); Maeda, Masaya, Tokyo, Tokyo 105-8001 (JP); Irie, Bunpei, Tokyo, Tokyo 105-8001 (JP); Watanabe, Yuka, Tokyo, Tokyo 105-8001 (JP)
(74) Representative: Horn Kleimann Waitzhofer Patentanwälte PartG mbB

(57) **Abstract**

A delivery processor (10) includes at least a recognizer (16) configured to recognize information assigned to an object to be delivered, a comparator (18) configured to compare at least a part of an address contained in information recognized by the recognizer to at least a part of an address included in an address list stored in a memory (42), and a determiner (20) configured to refer to information of at least a part of a name in a case that the comparator determined that at least the part of the address is not matched. The delivery address is determined to be an address associated with a matched name included in the address list.

## Description

### CROSS-REFERECNE TO RELATED APPLICATION

This application is based upon and claims the benefit of priority from Japanese Patent Application No. 2015-041289, filed March 3, 2015; the entire contents of which are incorporated herein by reference.

### FIELD

Embodiments described herein relate generally to the field of delivery processors and to computer readable storage media including a delivery processing program.

### BACKGROUND

A processor can read an address from an image of an object to be delivered by using a character recognition process. A delivery location for the object to be delivered can then be recognized by using the address. However, the conventional technology may not be able to determine the delivery location if only a portion of the address can be recognized.

### BRIEF DESCRIPTION ON THE DRAWINGS

FIG. 1 is a schematic diagram of a delivery processing system.
FIG. 2 is a diagram illustrating a configuration example of a delivery processing system.
FIG. 3 is a diagram illustrating an example of information stored as a recipient database 42.
FIG. 4 is a flowchart illustrating a process flow implemented by a delivery processor.
FIG. 5 is a diagram for explaining processing done by a recipient-related information indication region detector.
FIG. 6 is a flowchart illustrating another example of a process flow implemented by a delivery processor.
FIG. 7 is a diagram for explaining correct name extraction processing using an easily misrecognized information list.
FIG. 8 is a diagram illustrating a configuration of a delivery processing system including a delivery processor.
FIG. 9 is a diagram for explaining processing of a major customer image determiner.
FIG. 10 is a diagram for explaining details of a recipient region within a label shown in FIG. 9.
FIG. 11 is a diagram illustrating an image of a major customer label.
FIG. 12 is a diagram illustrating format features of the label shown in FIG. 11.
FIG. 13 is a diagram illustrating an image of a major customer label.
FIG. 14 is a flowchart illustrating a process flow implemented by a delivery processor.
FIG. 15 is a diagram illustrating an example of displaying, in a terminal device, a region in which name or appellation information is stored in a major customer database.
FIG. 16 is a diagram illustrating a state where coordinate values are changed using a tablet terminal.

### DETAILED DESCRIPTION

In some embodiments, a delivery processor comprising: a recognizer configured to recognize information assigned to an object to be delivered, the information obtained by OCR processing of an image of the object to be delivered imaged by an imager; a comparator configured to compare at least a part of an address contained in information recognized by the recognizer to at least a part of an address included in an address list stored in a memory, the comparator being configured to determine whether or not at least the part of the address is matched to the at least the part of the address included in the address list; and a determiner configured to refer to information of at least a part of a name or appellation in a case that the comparator determined that at least the part of the address is not matched to at least the part of the address included in the address list, the determiner being configured to determine whether or not at least a part of the name or appellation, which is included in information recognized by the recognizer, is matched to at least a part of the name or appellation associated with the address included in the address list, and the determiner being configured to determine as a delivery address, an address, which is associated with the name or appellation as matched, in cases that the determiner determines that the at least the part of the name or appellation is matched to at least the part of the name or appellation associated with the address included in the address list.

In some embodiments, the delivery processor further may include, but is not limited to, a manager configured to associate the recognized name or appellation with an address contained in the address list and registers name associated with an address contained in the address list in a case that the manager determines that name-registration conditions relating to the recognized name or appellation have been satisfied.

In some embodiments, the delivery processor further may include, but is not limited to, the manager is configured to make changes to the predefined conditions in accordance a request for change entered.

In some embodiments, the delivery processor further may include, but is not limited to, the recognizer is configured to refer to an information list including at least one of characters, texts and symbols of a names or appellation; wherein the recognizer is configured to refer to a list of highly misrecognized patterns that includes at least one of: 1) a highly misrecognized string of at least one of texts and symbols, 2) at least one highly misrecognized character, 3) at least one highly misrecognized text; and 4) at least one highly misrecognized symbol, the highly misrecognized pattern being associated with a names or appellation; and wherein the recognizer is configured to change the recognized one of characters, texts, symbols and strings of the characters, texts, and symbols into the names or appellation associated with the highly misrecognized pattern if the recognizer at least recognized that one of string, character, text, and symbol is identical to the highly misrecognized pattern.

In some embodiments, the delivery processor further may include, but is not limited to, a second manager that, a second manager configured to newly adds, based on an association relationship between an address and at least one of misrecognized strings, characters, texts, and symbols, a new highly misrecognized pattern into the list of highly misrecognized patterns, in a case that it has been determined plural times that the address is associated with the misrecognized one of characters, texts, symbols and strings of the characters, texts, and symbols.

In some embodiments, the delivery processor further may include, but is not limited to, a specifier configured to refer to a specified supplemental information including an identifier and a position in a label of a destination information, the position being associated with the identifier, the identifier identifying that a sender of the object to be delivered is a specified sender, the recognizer is configured to recognize the identifier that has been imaged by the imager; the specifier is configured to specify the position associated with the identifier; and the recognizer is configured to recognize an address of a destination of the destination information at the position specified.

In some embodiments, the identifier includes at least one of: text information; information encoded in a linear or two-dimensional barcode; information indicating a format of a label in which information including an address is described; and symbol information.

In some embodiments, the delivery processor further may include, but is not limited to, a maintainer configured to make at least one of: changing position or size of the region corresponding to the specified supplemental information; adding specifying information into the specified supplemental information; and deleting specifying information from the specified supplemental information.

In some embodiments, a delivery processor comprising:, a recognizer configured to recognize information assigned to an object to be delivered, the information obtained by OCR processing of an image of the object to be delivered imaged by an imager; a comparator configured to compare at least a part of an address contained in information recognized by the recognizer to at least a part of an address included in an address list stored in a memory, the comparator being configured to determine whether or not at least the part of the address is matched to the at least the part of the address included in the address list; and a determiner configured to refer to information of at least a part of a name or appellation in a case that the comparator determined that the at least the part of the address is not matched to the at least the part of the address included in the address list, the determiner configured to determine whether or not at least a part of the name or appellation, which is included in information recognized by the recognizer, is matched to at least a part of the name or appellation associated with the address included in the address list, and the determiner configured to determine whether or not an address recognized by the recognizer is imperfect and compensable with an address associated with the name or appellation matched at least in part with the at least the part of the name or appellation associated with the address included in the address list, the determiner configured to compensate the address recognized with the address associated with the name or appellation, and the determiner configured to determine that the address compensated as a delivery address.

In some embodiments, a non-transitory computer-readable storage medium that stores a computer program to be executed by a computer to perform at least: recognize that recognizes information assigned to an object to be delivered, the information obtained by OCR processing of an image of the object to be delivered imaged; compare at least a part of an address contained in information recognized to at least a part of an address included in an address list, determine whether or not at least the part of the address is matched to the at least the part of the address included in the address list; and refer to information of at least a part of a name or appellation in a case that at least the part of the address is not matched to at least the part of the address included in the address list, determine whether or not at least a part of the name or appellation, which is included in information recognized, is matched to at least a part of the name or appellation associated with the address included in the address list, and determine that an address, which is associated with the name or appellation as matched, as a delivery address, in cases that the at least the part of the name or appellation is matched to at least the part of the name or appellation associated with the address included in the address list.

Embodiments of a delivery processor 10, and a delivery processing system 1 including a non-transitory computer-readable storage medium with an executable program stored thereon, are explained with reference to the drawings.

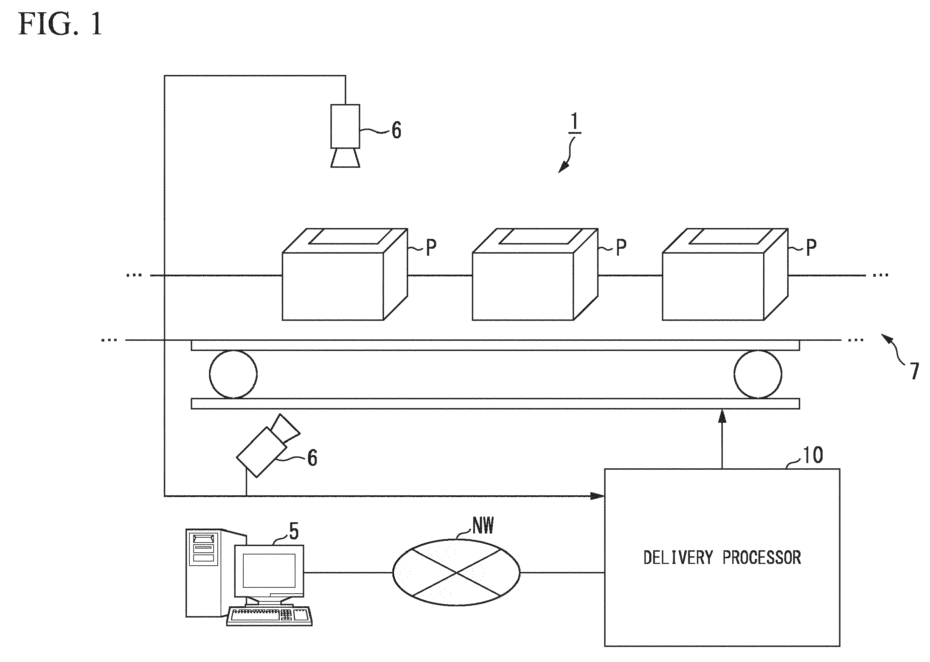

FIG. 1 is a schematic diagram of a delivery processing system. The delivery processing system 1 is a system that classifies a variety of objects to be delivered P, including home delivery parcels, into classification locations based on recipient. The delivery processing system 1 may take an image of the object P to be delivered as it is conveyed by a classification mechanism 7 that includes, for example, a belt conveyor, a sandwich belt, or the like. The delivery processing system 1 recognizes address information described on a label or the like affixed to the object P to be delivered from an image imaged by an imager 6, and then classifies the object P based on the recognized address information. The delivery processing system 1 may also be used to classify postal mail such as postcards and envelopes.

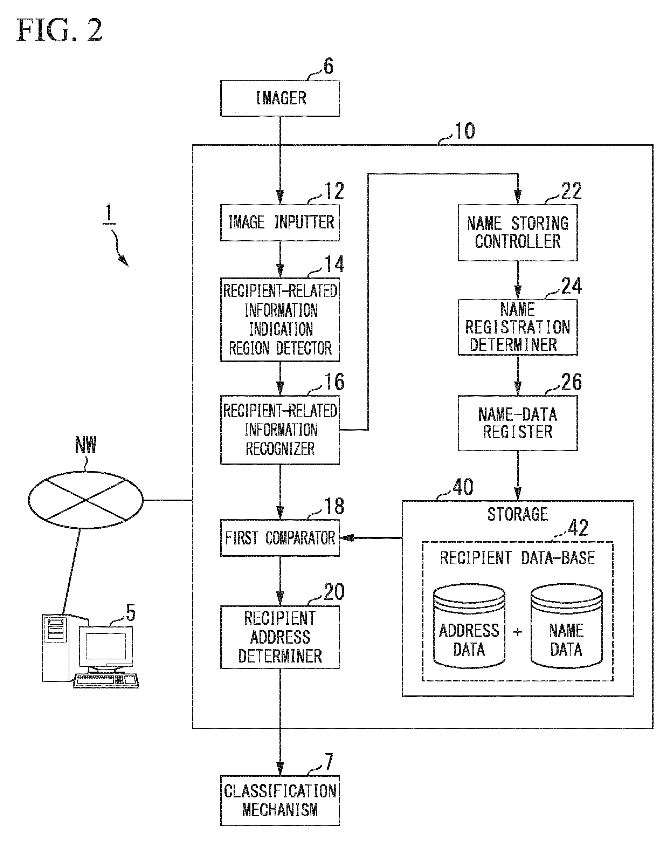

FIG. 2 is a diagram illustrating a configuration of the processing system. The delivery processing system 1 may include a terminal 5, the imager 6, the classification mechanism 7, and the delivery processor 10.

The terminal 5 is a device useful for information input by an operator. The terminal 5 may include a display for displaying an image, as well as a voice, image, or other input device such as a keyboard, mouse, touch panel, or microphone. The terminal 5 and the delivery processor 10 may be connected by a network NW such as a wide area network ("WAN") or a local area network ("LAN") or may be integrated together.

The imager 6 images an image of the object P to be delivered as it arrives at an imaging location, and supplies the image to the delivery processor 10. The imager 6 may include multiple line scan type scanners, for example, which are images a high definition image of the object P to be delivered while the object P is in motion. Positioning multiple scanners at positions at which the scanners can take images of the object P to be delivered from different angles may allow the imager 6 to image multiple sides of the object P. The imager 6 may also include a camera images a single image of a predefined planar region. The classification mechanism 7 conveys the object P to be delivered to a classification destination determined by the delivery processor 10.

The delivery processor 10 may include an image inputter 12, a recipient-related information indication region detector 14, a recipient-related information recognizer 16, a first comparator 18, a recipient address determiner 20, a name storing controller 22, a name registration determiner 24, a name-data register 26, and a storage 40. The image inputter 12, the recipient-related information indication region detector 14, the recipient-related information recognizer 16, the first comparator 18, the recipient address determiner 20, the name storing controller 22, the name registration determiner 24 and the name-data register 26 are implemented by a central processing unit ("CPU") or the like running a program stored in the storage 40. One or more of the image inputter 12, the recipient-related information indication region detector 14, the recipient-related information recognizer 16, the first comparator 18, the recipient address determiner 20, the name storing controller 22, the name registration determiner 24, and the name-data register 26 may also be circuitry such as a large scale integration ("LSI") circuit or application specific integrated circuit ("ASIC"). The delivery processor 10 also includes the network NW for connecting to a communicator (not shown). The storage 40 may be implemented using a read only memory ("ROM"), a random access memory ("RAM"), a hard disk drive ("HDD"), a flash memory, or the like.

The image inputter 12 acquires an image imaged by the imager 6 and stores the image in the storage 40. The recipient-related information indication region detector 14 detects a recipient candidate region from the image acquired by the image inputter 12 and stored in the storage 40. That is, the recipient-related information indication region detector 14 detects a region in which a label is affixed to the object P to be delivered, or in which an address is described on the object P. The recipient candidate region is a region in the image where a recipient address and/or a name or appellation may described on the object P to be delivered.

The recipient-related information recognizer 16 recognizes the object P to be delivered address recipient by performing optical character recognition ("OCR") on the recipient candidate region detected by the recipient-related information indication region detector 14. If multiple recipient candidate regions exist, the recipient-related information recognizer 16 recognizes the object P to be delivered recipient addresses from characters and/or symbols contained with each of recipient candidate regions. When there is only one recipient candidate region, the recipient-related information recognizer 16 recognizes the object P to be delivered recipient address from characters and/or symbols contained within that one recipient candidate region. Some recipient addresses may include an address as well as a name or appellation, while other recipient addresses may contain only an address, name, or appellation.

The first comparator 18 compares the recipient recognized by the recipient-related information recognizer 16 with information stored in the storage 40. If the address included in the recipient recognized by the recipient-related information recognizer 16 matches address information stored in the storage 40, the matching address is stored in the memory 40 as an address candidate.

Recipient address determiner 20 selects an address from among the address candidates stored in the storage 40 by the first comparator 18, and determines that the selected address is the recipient for the object P to be delivered. In some cases, the address contained in the recipient recognized by the recipient-related information recognizer 16 from the comparison results provided by the first comparator 18 may not match address information stored in the storage 40. The recipient address determiner 20 will then determine the recipient address for the object P to be delivered based on a name or appellation if the name or appellation recognized by the recipient-related information recognizer 16 satisfies a predefined condition.

The name storing controller 22 stores names or appellations recognized by the recipient-related information recognizer 16 in the storage 40. The term "stores" as used herein means storing in a temporary storage region of a RAM or the like in the storage 40. The name registration determiner 24 determiners whether or not the name or appellation stored by the name storing controller 22 is registered in the storage 40. The name-data register 26 associates the stored name or appellation with an address, and stores that information in the storage 40. The term "registers" as used herein means storing in a non-volatile memory such as a HDD or a flash memory in the storage 40 to be used in subsequent operations. The name storing controller 22, the name registration determiner 24, and the name-data register 26 together comprise an example of a "manager".

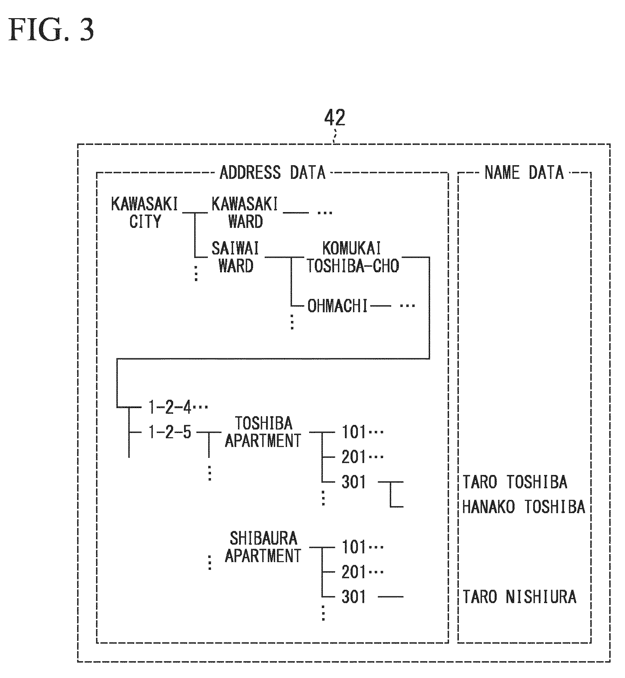

The storage 40 stores a recipient data-base 42. The recipient data-base 42 may have a data structure that associates address data (address list information) and name data. FIG. 3 is a diagram illustrating an example of information stored as the recipient data-base 42. Address data is information is hierarchical address information. City or town, district, street address, building name, apartment or suite number, and the like may be classified and stored as a first hierarchy. Name data is information associating a name or appellation with a lowest hierarchy of an address. The term lowest hierarchy means a hierarchy that includes classifications of street number, building name, and apartment number, which are able to specify an individual from an address.

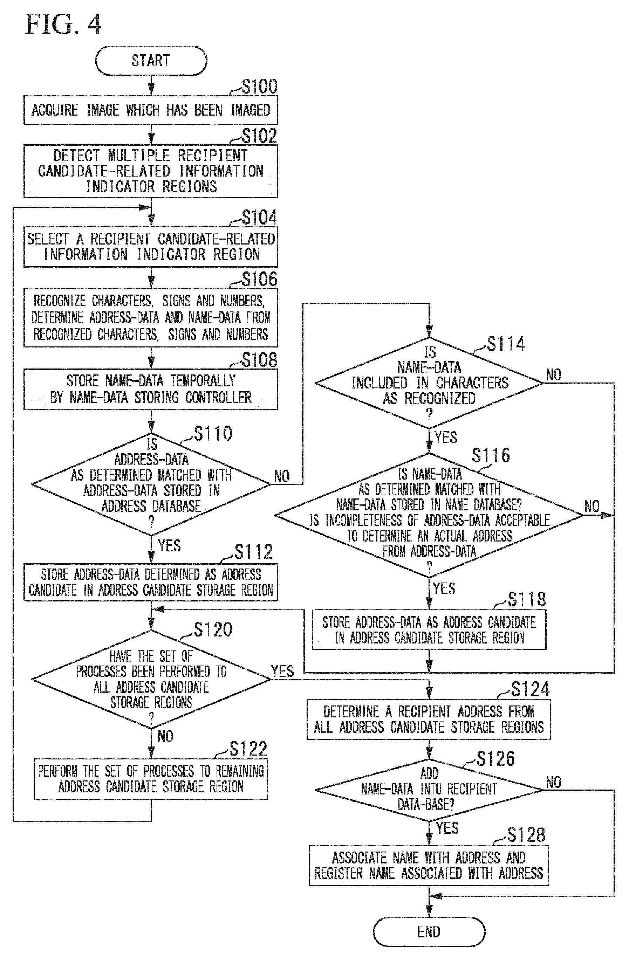

FIG. 4 is a flowchart illustrating a process flow implemented by the delivery processor 10. First, at S100 the image inputter 12 acquires an image imaged by the imager 6. Next, at S102 the recipient-related information indication region detector 14 detects multiple recipient candidate-related information regions from the image acquired from the image inputter 12.

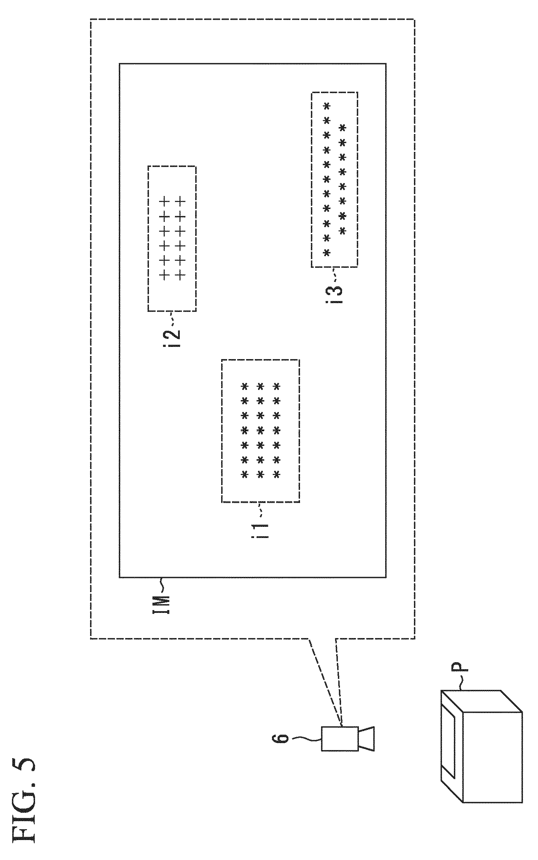

FIG. 5 is a diagram for explaining the processing done by the recipient-related information indication region detector 14. An image IM in FIG. 5 includes an upper surface portion of the object P to be delivered imaged by the imager 6. The recipient-related information indication region detector 14 extracts recipient candidate regions i1 to i3 from the image IM. The recipient-related information indication region detector 14 identifies outlines of characters and symbols in the acquired image using brightness differences between adjacent pixels, for example. The recipient-related information indication region detector 14 gathers the identified contours and takes successively propagating regions deemed to be text or symbols as candidate character strings. The recipient-related information indication region detector 14 groups together candidate character strings having the same directionality and located close to one another as recipient candidate regions.

Next, at S104, the recipient-related information recognizer 16 selects a recipient candidate-related information indicator region from the multiple recipient candidate regions. Then, at S106, the recipient-related information recognizer 16 recognizes recognize characters, signs and numbers determine address-data and name-data from recognized characters, signs and numbers.

The recipient-related information recognizer 16 may recognize text or symbols contained in the character string candidate by referencing character group information that includes pre-stored character and symbol information. The recipient-related information recognizer 16 need not identify characters one at a time. Rather, the recipient-related information recognizer 16 may also employ a process where dictionary information containing place names and personal names, and increase a detection score when a correspondence is found with a connected character string, such as place name and district. The recipient-related information recognizer 16 classifies addresses and names or appellations contained in candidate character strings. For example, the recipient-related information recognizer 16 may select a character string having connectivity from classified text or symbols, compare the length or size of the selected character string with a standard length or size pre-set as a standard. The recipient-related information recognizer 16 determines whether or not the character string having connectivity corresponds to an address, or to a name or appellation. Note that character strings may be written horizontally or vertically.

At S108 the name storing controller 22 store name-data temporally. The name storing controller 22 may store the name or appellation as text information, or as an image containing the name or appellation. The name storing controller 22 may also store an address associated with the name. If no name or appellation is contained within the recipient candidate region recognized by the recipient-related information recognizer 16, processing skips S108 and proceeds to S110.

Next, at S110 the first comparator 18 compares information stored in the recipient data-base 42 with a character string corresponding to an address from among the characters and/or symbols recognized by the recipient-related information recognizer 16. At S110 the first comparator 18 compares whether or not address-data as determined is matched with Address-Data Stored in recipient data-base 42.

The term "match" as used herein includes complete agreement, as well as cases when Japanese kanji characters are replaced with Japanese hiragana syllabary characters, when Japanese kanji numerals and Arabic numerals are interchanged, as well as when Japanese hiragana syllabary characters are interchanged with Japanese katakana syllabary characters. The term match also includes cases where a large classification, such as state, prefecture, or province name is omitted.

If results from the first comparator 18 show that information stored in the recipient data-base 42 matches a character string corresponding to an address from among the characters and/or symbols recognized by the recipient-related information recognizer 16. At S112, the first comparator 18 stores address-data determined as address candidate in address candidate storage region

If results from the first comparator 18 show that information stored in the recipient data-base 42 does not match a character string corresponding to an address from among the characters and/or symbols recognized by the recipient-related information recognizer 16, at S114, the first comparator 18 then determines whether or not name-data is Included in characters as recognized.

Processing continues at S120 if the character string recognized by the recipient-related information recognizer 16 does not contain a name or appellation. For cases where a name or appellation is included in a character string recognized by the recipient-related information recognizer 16, at S116, the recipient address determiner 20 determines whether or not name-data as determined is matched with name-data stored in recipient data-base 42, and determines whether or not incompleteness of address-data is acceptable to determine an actual address from address-data.

If the incompleteness of address-data is unacceptable, the recipient address determiner 20 proceeds to S120. If the recipient address determiner 20 determines that name-data as determined is not matched with name-data stored in recipient data-base 42, or if the recipient address determiner 20 determines that incompleteness of address-data is unacceptable to determine an actual address from address-data, then the recipient address determiner 20 determines that the incompleteness of address-data be unacceptable, thereby proceeding to S120.

If the recipient address determiner 20 determines name-data as determined is matched with name-data stored in recipient data-base 42, and if the recipient address determiner 20 determines that incompleteness of address-data is acceptable to determine an actual address from address-data, then the process is going to S118 at which the recipient address determiner 20 stores address-data as address candidate in address candidate storage region.

An address found from a name or appellation is explained here with reference to FIG. 3. For example, take an address "Taro Toshiba, 301 Toshiba Coop, 1-2-5 Komukai-toshiba, Saiwai Ward, Kawasaki City" as described on the object P to be delivered. The character string corresponding to the address recognized by the recipient-related information recognizer 16 is "Coop, 1-2-5 Komukai-toshiba, Saiwai Ward, Kawasaki City". There is an address in the recipient data-base 42 shown as "301 Toshiba Coop, 1-2-5 Komukai-toshiba, Saiwai Ward, Kawasaki City", and a character string corresponding to a name recognized by the recipient-related information recognizer 16 is "Taro Toshiba". In this case the building name and the apartment number cannot be identified from the address recognized by the recipient-related information recognizer 16. The recipient address determiner 20 therefore cannot specify a recipient address using only the address determined by the recipient-related information recognizer 16.

However, if a portion of the recognizable address "Coop, 1-2-5 Komukai-toshiba, Saiwai Ward, Kawasaki City" contains information specifies an address to a certain extent, data can be extracted from the recipient data-base 42 containing both the recognized address and the name "Taro Toshiba". Address information included in the extracted data can be used to supplement the missing recipient address information. In other words, even if the entire address described on the object P to be delivered cannot be recognized, the address can be supplemented by using the name or appellation described on the object P to be delivered.

At S120 the recipient-related information recognizer 16 determines whether or not the set of processes has been performed to all address candidate storage regions. If the recipient-related information recognizer 16 determines that the set of processes has not yet been performed to all address candidate storage regions, then the process is going to S122 where the recipient-related information recognizer 16 performs the set of processes to remaining address candidate storage region. Then, the process is going to S104, where the recipient-related information recognizer 16 selects a recipient candidate-related information indicator region from the multiple recipient candidate regions.

If the recipient-related information recognizer 16 determines that the set of processes has already been performed to all address candidate storage regions, then the process is going to S124 where the recipient address determiner 20 determine a recipient address from all address candidate storage regions. For example, character recognition scores are obtained through character string recognition processes by the recipient-related information recognizer 16 using OCR processing. The recipient address determiner 20 may determine that the address candidate possessing the highest character recognition score is the recipient address.

Next, at S126 the name registration determiner 24 determines whether or not to add name-data stored in S108 into the recipient data-base 42. If the name registration determiner 24 determined to add name-data into the recipient data-base 42, the name registration determiner 24 adds name-data into the recipient data-base 42. Then, the process is going to S128, where the name-data register 26 associates the name with the address and registers the name associated with the address.

If it is determined that the stored name or appellation should not be added to the recipient data-base 42, processing of the flowchart illustrated in FIG. 4 is thus complete. The determination at S126 may be made based on whether or not predefined conditions are satisfied. For example, if a predefined number or a combination of the same name or appellation and address have been stored in the storage 40 by the name storing controller 22, then the name-data register 26 registers the name or appellation and associated address in the name data of the recipient data-base 42. New information such as a new building name or new occupant is thus added to the recipient data-base 42. Note that the predefined conditions may be changed based on information input from the terminal device 5, for example. The name-date register 26 may also compare performance evaluation results from before and after registering data in the recipient data-base 42 with fixed extent evaluation data stored in advance. The name or appellation may be registered if the effectiveness of the registry is verified based on the performance evaluation results. If the effectiveness is not verified, the name or appellation may not be registered. The determination of whether or not to register the name or appellation in the recipient data-base 42 may also be made based on operator actions.

One or more embodiments of the delivery processor 10 may allow an address contained in information recognized by the address recognizer 16 to be compared with information stored in the storage 40. If a match between the address and the stored information is not determined, the address of the object P to be delivered may be determined based on a name or appellation stored in the storage 40, thus increasing the rate at which addresses of the object P to be delivered can be identified. Further, information containing an address and a name or appellation assigned to the object P to be delivered may be recognized based on an image of the object P to be delivered imaged by the imager 6. By storing the recognized address and name or appellation in the memory under predefined conditions, an association of the name or appellation with the address can be effectively acquired.

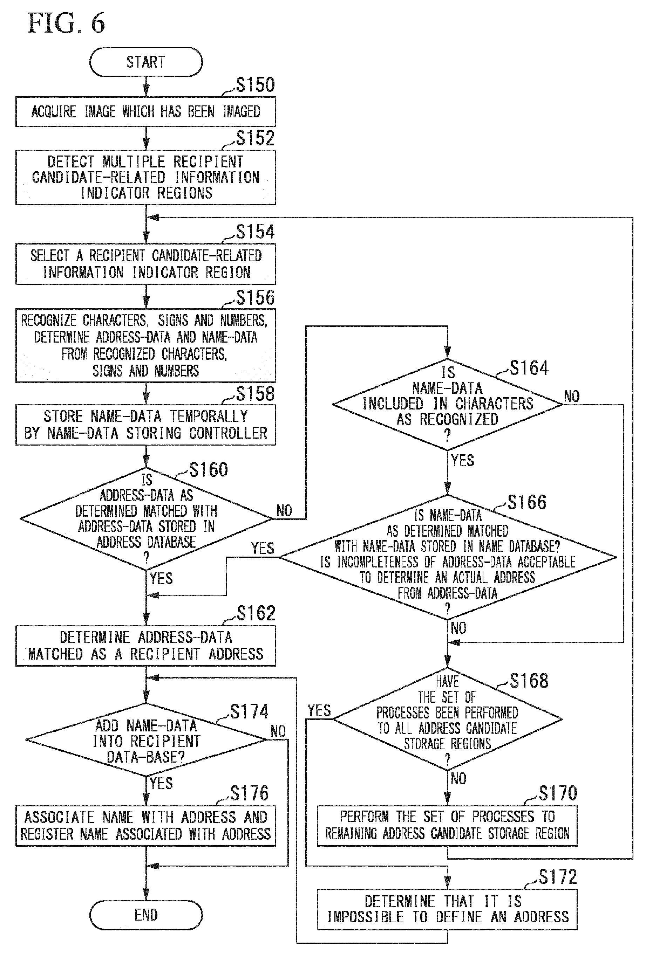

Processes illustrated in FIG. 4 may be changed as described below. FIG. 6 is a flowchart illustrating another example of a process flow implemented by the delivery processor 10. With the processing illustrated in FIG. 4, address candidates are not registered when there is a match between an address contained in information recognized by the recipient-related information recognizer 16, and information stored in the storage 40. Neither are address candidates registered when an address can be supplemented from a name or appellation recognized by the recipient-related information recognizer 16. Rather, for each case processing is performed with the address as confirmed.

First, at S150, the image inputter 12 acquires an image imaged by the imager 6. Next, at S152 the recipient-related information indication region detector 14 detects multiple recipient candidate-related information regions from the image acquired from the image inputter 12. The recipient-related information recognizer 16 selects a recipient candidate-related information indicator region from the multiple recipient candidate regions, at S154. The recipient-related information recognizer 16 recognizes recognize characters, signs and numbers determine address-data and name-data from recognized characters, signs and numbers at S156. Next, at S158, the name storing controller 22 store name-data temporally. If a name or appellation is not found within the name candidate region recognized by the recipient-related information recognizer 16, S158 is skipped and processing proceeds to S160.

Next, at S160 the first comparator 18 compares whether or not address-data as determined is matched with address-data stored in recipient data-base 42. If address-data as determined is matched with address-data stored in recipient data-base 42, the recipient address determiner 20 determines address-data matched as a recipient address at S162. If address-data as determined is not matched with address-data stored in recipient data-base 42, at S164 the first comparator 18 then determines whether or not name-data is included in characters as recognized by the recipient-related information recognizer 16. If there is no name or appellation contained in the character string, processing proceeds to S168. If the first comparator 18 determines that the name-data is included in characters as recognized by the recipient-related information recognizer 16, at S166 the recipient address determiner 20 determines whether or not name-data as determined is matched with name-data stored in recipient data-base 42, and determines whether or not incompleteness of address-data is acceptable to determine an actual address from address-data. If the recipient address determiner 20 determines name-data as determined is matched with name-data stored in recipient data-base 42, and if the recipient address determiner 20 determines that incompleteness of address-data is acceptable to determine an actual address from address-data, then the process is going to S162 at which the recipient address determiner 20 stores address-data as address candidate in address candidate storage region.

If the incompleteness of address-data is unacceptable, the recipient address determiner 20 proceeds to S168. If the recipient address determiner 20 determines that name-data as determined is not matched with name-data stored in recipient data-base 42, or if the recipient address determiner 20 determines that incompleteness of address-data is unacceptable to determine an actual address from address-data, then the recipient address determiner 20 determines that the incompleteness of address-data be unacceptable, thereby proceeding to S168.

At S168, the recipient-related information recognizer 16 determines whether or not the set of processes has been performed to all address candidate storage regions. If the recipient-related information recognizer 16 determines that the set of processes has not yet been performed to all address candidate storage regions, then the process is going to S170 where the recipient-related information recognizer 16 performs the set of processes to remaining address candidate storage region. Then, the process is going to S154, where the recipient-related information recognizer 16 selects a recipient candidate-related information indicator region from the multiple recipient candidate regions.

If the recipient-related information recognizer 16 determines that the set of processes has already been performed to all address candidate storage regions, then the process is going to S172 where the recipient address determiner 20 determine a recipient address from all address candidate storage regions. At S172 the recipient address determiner 20 determines that it is impossible to define an address. The address may be a recipient address and/or a sender address. In some cases, the address is a recipient address.

In this case the recipient address determiner 20 may, for example, control the classification mechanism 7 to convey the object P to be delivered to a location from which it will be reprocessed. Next, at S174 the name registration determiner 24 adds name-data into recipient data-base 42.

If the name registration determiner 24 determined to add name-data into recipient data-base 42, then the process is going to S176, where the name-data register 26 associates the name with the address and registers the name associated with the address. At S176 the name-data register 26 associate name with address and register name associated with address
Processing of the flowchart illustrated in FIG. 6 is thus complete.

The recipient address determiner 20 confirms the address of the object P to be delivered without registering a candidate for cases where results of the first comparator 18 comparing the address contained in information recognized by the recipient-related information recognizer 16 and information stored in the storage 40 match and for cases where the address can be supplemented from the name recognized by the recipient-related information recognizer 16. The object P to be delivered address can therefore be quickly confirmed.

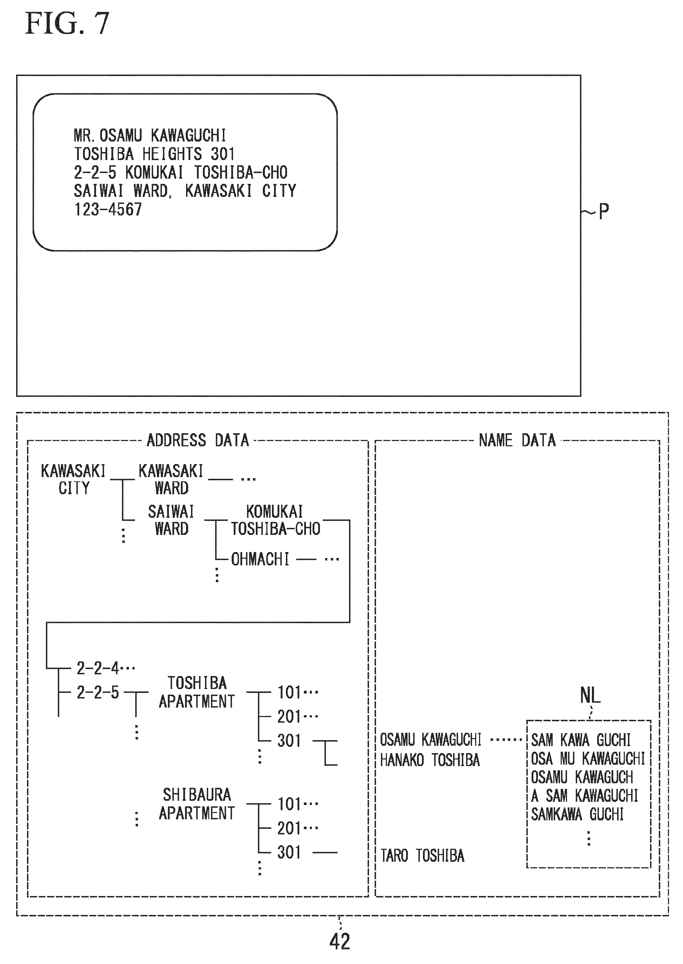

Examples of text, symbols, characters, or combination thereof that are easily mistaken may be assigned to a correct name or appellation ("correct name") and stored in the name data of the recipient data-base 42 as an easily misrecognized information list. In this case, from the name data of the recipient data-base 42 the recipient-related information recognizer 16 can extract a correct name associated with text or symbols determined to be a name or appellation after recognition, and exchange the correct name with the recognition results. FIG. 7 is a diagram for explaining correct name extraction processing using an easily misrecognized information list NL. As FIG. 7 illustrates, a name "Osamu Kawaguchi" is described on the object P to be delivered. Name data in the recipient data-base 42 illustrated in the lower portion of FIG. 7 show examples of easily misrecognized names associated with the correct name Osamu Kawaguchi that may be found when performing recognition processing. For example, the correct name Osamu Kawaguchi may be misrecognized as Sam Kawa Guchi, or as Osa Mu Kawaguchi. Other examples of that may be stored in the easily mistaken information list NL may include Osamu Kawaguch and A Sam Kawaguchi.

The recipient-related information recognizer 16 references the name data of the recipient data-base 42 for name or appellation recognition results, and determines whether or not the recognition results are included in the easily misrecognized information list NL. If the recognition results are included in the easily misrecognized information list NL, the recipient-related information recognizer 16 exchanges the recognition results with the correct name corresponding to the recognition results. For example, if the name or appellation was recognized as Samkawa Guchi, the recipient-related information recognizer 16 corrects the recognition results to Osamu Kawaguchi. The recipient-related information recognizer 16 can thus increase the recognition accuracy of the name or appellation contained in the image.

In this case the easily misrecognized name or appellation may be stored as name data in the recipient data-base 42 by the following process. If a recognized string of text or symbols determined to be a name or appellation is found to occur multiple times with respect to the same address, the recognized string of text or symbols is registered as the recipient data-base 42 as name data associated with the correct name.

The name-date register 26 extracts a string of text of symbols recognized as a name or appellation from an image. By turning the number of recognitions into a numerical score, generation and updating of the name data in the recipient data-base 42 can be performed.

Specifically, if there is one string of text or symbols having a numerical score equal to or greater than a threshold value, the name-data register 26 first registers the string of text or symbols as a correct name in the recipient data-base 42. For cases where there are two or more strings of text or symbols having a score equal to or above the threshold value, the name-data register 26 registers the string having the higher score as a correct name, and registers all strings of text or symbols having lower scores as easily misrecognized strings of text of symbols in the name data of the recipient data-base 42. If the difference between scores among two strings of text or symbols is small, that is less than a difference threshold value, both strings may be registered in the name data of the recipient data-base 42 as correct names. This is because at least two people having different names may be living at a specific address.

The name-data register 26 may also search for a border line having the greatest degree of separation in the distribution of scores. Strings of text or symbols having a score higher than the border line may be registered in the name data of the recipient data-base 42 as one or multiple correct names. Strings of text or symbols having a score below the border line may be registered in the easily misrecognized information list NL. The term degree of separation is defined as a difference in feature amount (such as average value, norm, or the like) between groups separated by the border line.

The threshold value may be set to a higher value when performing recognition processing on printed characters or symbols, and may be set to a lower value when hand-written characters or symbols are being recognized. Characters may be determined as printed or hand-written by determining whether or not the characters recognized by the recipient-related information recognizer 16 match with font information stored in advance in the storage 40.

In one or more embodiments of a delivery processor 10A, it may be determined that an object P to be delivered shipper is a major customer. Regions where recipients are described on the object P to be delivered may then be specified.

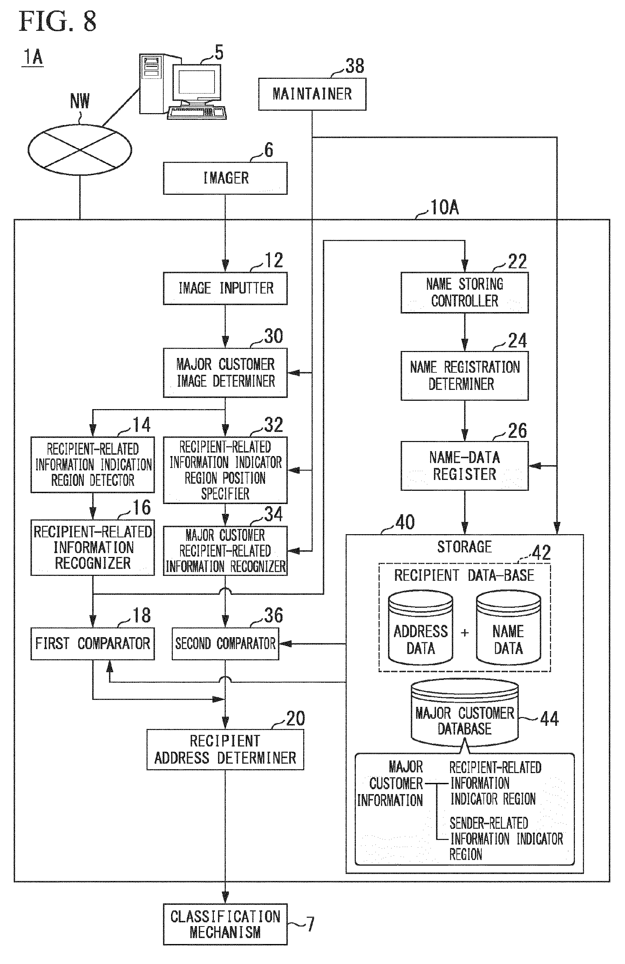

FIG. 8 is a diagram illustrating a configuration of a delivery processing system 1A including the delivery processor 10A. In addition to constituents described above, the delivery processor 10A may also include a major customer image determiner 30, a recipient-related information indicator region position specifier 32, a major customer recipient-related information recognizer 34, a second comparator 36, and a maintainer 38. The maintainer 38 may be a function of the terminal device 5, for example, or may be a function of the delivery processor 10A. Further, in addition to the recipient data-base 42, the storage 40 also stores a major customer database 44 with specified supplemental information.

The major customer database 44 stores mutually associates major customer information (specified supplemental information), the location and size of recipient regions in labels used by major customers (regions associated with specified supplemental information), and the location and size of a sender region showing the address and name or appellation of the sender. The term "major customer information" means information such as text information, symbols, label formats, common label pattern, and information encoded in linear or two dimensional barcodes, affixed to objects to be delivered P when sent by a major customer. By recognizing this information, a determination can be made that an object P to be delivered has been sent by a major customer. Label features, label images, and the like may also be included in major customer information. Label features may include information on relative positions of specific border lines, or text or symbol clusters. Specific border lines, or text and symbol clusters may be specified to be present at upper left and lower right coordinate positions, for example.

The major customer image determiner 30 acquires an image of an object P to be delivered from the image inputter 12, and determines whether or not the object P is from a major customer based on the image and on information stored in the major customer database 44.

The recipient-related information indicator region position specifier 32 determines the location of a recipient region in an image by referencing the major customer database 44 for cases where the image has been identified by the major customer image determiner 30 as an object P to be delivered is from a major customer. The recipient region may include only an address, or may also include a name or appellation in addition to an address.

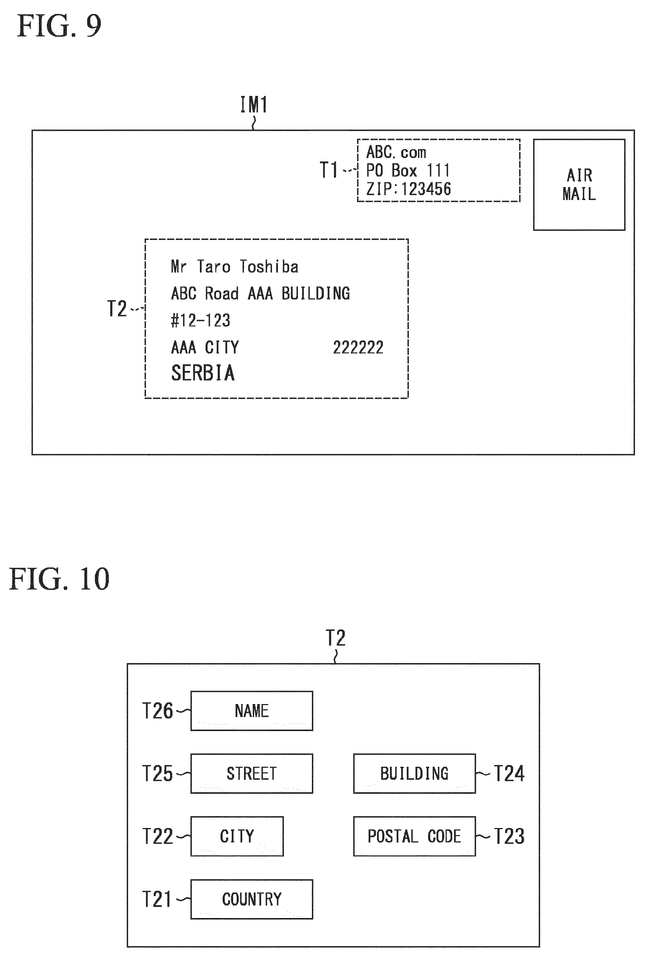

FIG. 9 is a diagram for explaining the major customer image determiner 30. An image IM1 is an image imaged by the imager 6 of a label affixed to an object P to be delivered. In the example of FIG. 9, the label on the object P to be delivered sent by a major customer includes features such as a sender address and delivery charge in an upper right portion, and a recipient address in a center portion. Information relating to the location of specific features for specific major customers is stored in the major customer database 44. In FIG. 9, the major customer image determiner 30 may determine whether or not a major customer has sent the object P to be delivered based on whether or not the location and size of a sender region T1 and a recipient region T2 correspond to the location and size of a sender region and a recipient region stored in the major customer database 44. The term "correspond to" means exact matches, as well as matches where points of difference are within a permissible range.

FIG. 10 is a diagram for explaining details of the recipient region within the label shown in FIG. 9. Features such as a country region T2 in which a country name is described, a city region T22 in which a city name is described, a postal code region T23 in which a postal code is described, a building name region in which a building name is described, a street region T25 in which a street is described, and a name region in which a name or appellation is described may be present in the recipient region T2 at locations shown on the label in FIG. 10. These features are stored as detailed recipient region information within the major customer database 44. The recipient-related information indicator region position specifier 32 may reference the major customer database 44 when the major customer image determiner 30 has determined that an image shows an object P to be delivered from a major customer. The recipient-related information indicator region position specifier 32 may then infer that entries recorded within specific predefined areas of the recipient region correspond to specific recipient information.

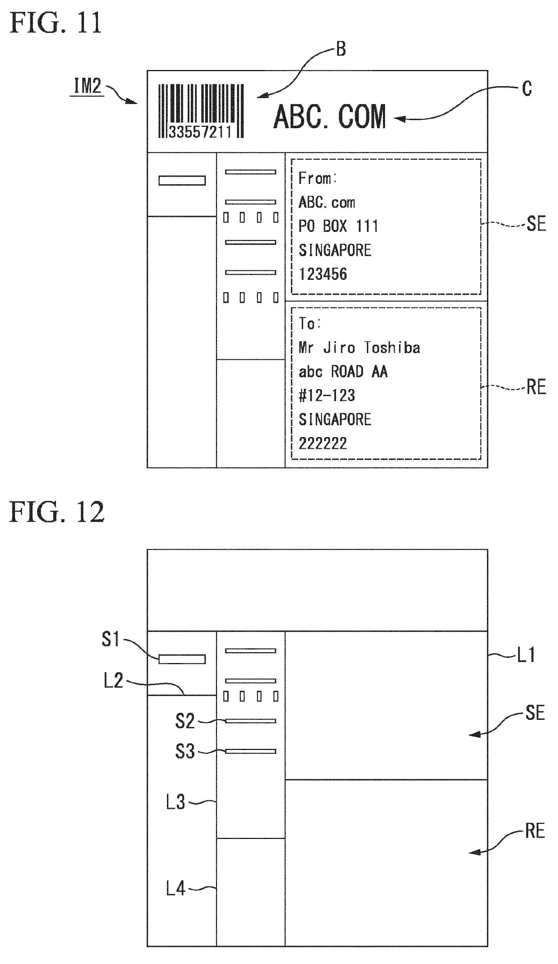

FIG. 11 is a diagram illustrating an image IM2 of a major customer label. A label on an object P to be delivered sent by a major customer has a barcode B and a company domain name C as features in FIG. 11. Information that should be obtainable by decoding the barcode B (or barcode image information), text information indicating the company domain name C, and the like are stored in the major customer database 44 as major customer information. In this case, the major customer image determiner 30 may recognize information encoded in a barcode, or a company domain name, from an image, and then make a determination as to whether or not the image shows an object P to be delivered from a major customer based on the recognition results and on information stored in the major customer database 44. A code SE in FIG. 11 indicates a sender region, while a code RE indicates a recipient region. The recipient-related information indicator region position specifier 32 can specify the sender region and the recipient region RE based on results from the major customer image determiner 30.

A determination may also be made as to whether or not the image IM2 is that of an object P to be delivered from a major customer based on border lines within the label. The label on the object P to be delivered sent by a major customer illustrated in the example of FIG. 11 may also be characterized as having specific locations for border lines and shapes. FIG. 12 is a diagram illustrating format features of the label shown in FIG. 11. Features of the label may be indicated by border lines L1 through L4, and graphical shapes S1 through S3. Features such as the shape and location of border lines and graphical shapes are stored in the major customer database 44 as major customer information. The major customer image determiner 30 may determine whether or not the image is that of major customer label by recognizing border lines and graphic shapes using a feature extraction process or the like, and then comparing the location and size of the recognized border lines and graphic shapes with features stored in the major customer database 44.

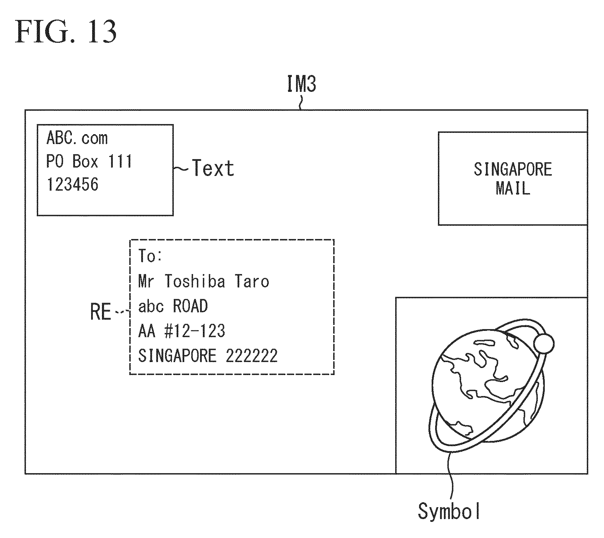

FIG. 13 is a diagram illustrating the image IM3 of a major customer label. Specified content text information "Text" and symbol information "Symbol" may be affixed to, or described on, the label put on an object P to be delivered sent by a major customer in the example of FIG. 13. The text information "Text" may indicate an address and/or a name of the object P to be delivered sender. Text information and symbol information content is stored in the major customer database 44 as major customer information. The major customer image determiner 30 may determine that the image IM3 is of an object P to be delivered sent by a major customer when the text information "Text", or the symbol information "Symbol", recognized from the image IM3 matches information stored in the major customer database 44.

The major customer recipient-related information recognizer 34 recognizes the recipient of an object P to be delivered using a recipient region specified by the recipient-related information indicator region position specifier 32. The recipient-related information indicator region position specifier 32 compares a recipient recognized by the major customer recipient-related information recognizer 34 and information stored in the recipient data-base 42. The maintainer 38 performs maintenance or adjustment to processes implemented by the major customer image determiner 30. Processes performed by the maintainer 38 are explained in detail below.

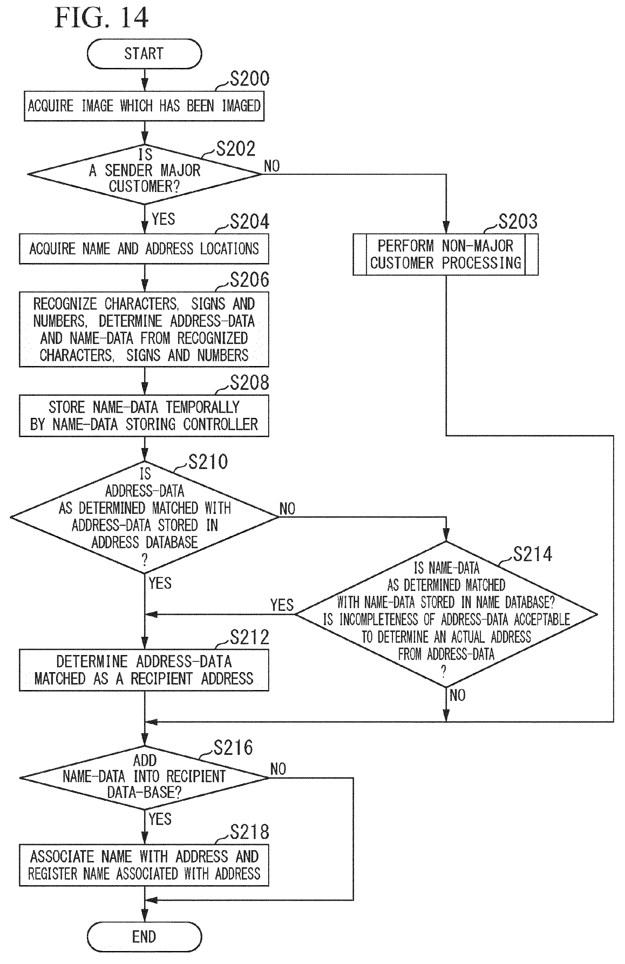

FIG. 14 is a flowchart illustrating a process flow implemented by the delivery processor 10A. This process flow is called major customer processing. First, at S200, the image inputter 12 acquires an image imaged by the imager 6. Next, at S202 the major customer image determiner 30 determines whether or not the image acquired from the image inputter 12 is of a major customer object P to be delivered. Next, at S202, the major customer image determiner 30 determines whether or not the image acquired from the image inputter 12 is object P to be delivered of sender major customer.

If the image is determined to not be an image of a major customer object P to be delivered, then a non-major customer process flow is executed at S203. If the major customer image determiner 30 determines to not be an image acquired from the image inputter 12 is object P to be delivered which is sent by major customer, a non-major customer process flow is executed at S203. The term non-major customer process flow means any processes already described using FIG. 4 or FIG. 6.

If the major customer image determiner 30 determines to be an image acquired from the image inputter 12 is object P to be delivered which is sent by major customer, at S204 the recipient-related information indicator region position specifier 32 references information stored in the major customer database 44 and acquires the locations of a recipient region, and a name region within the recipient region where a name or appellation is described, from the image. Next, at S206, the major customer recipient-related information recognizer 34 recognizes recognize characters, signs and numbers, determine address-data and name-data from recognized characters, signs and numbers.

The major customer recipient-related information recognizer 34 may determine whether or not an honorific is present with a personal name or appellation in the image, and may recognize the name or appellation based on that determination. An honorific may refer to a word such as "Sama", "Sensei", or "Onchuu" in Japanese, and may refer to a word such as "To" or "Mr." in English. Honorifics are stored in the major customer database 44 or in the recipient data-base 42.

Recognition of the name or appellation by the major customer recipient-related information recognizer 34 may also be done by referencing a name registry list on which names or appellations are pre-registered. The name registry list may be provided in the recipient data-base 42, for example. Family names and/or personal names may be registered on the name registry list by order of frequency in specific counties. Words that are frequently used in family names or personal names in a specific country may also be registered. The major customer recipient-related information recognizer 34 may recognize a name or appellation corresponding to a recognized text string by comparing the text string with words registered in the name registry list.

Next, at S208, the name storing controller 22 stores name-data temporally in the storage 40. If there is no name or appellation present within the recipient region recognized by the major customer recipient-related information recognizer 34, processing skips S208 and proceeds to S210.

Next, at S210, the first comparator 18 determines whether or not address-data as determined is matched with address-data stored in the recipient data-base 42. The second comparator 36 then compares information stored in the recipient data-base 42 with a character string corresponding to an address from the text or symbols recognized by the major customer recipient-related information recognizer 34. If address-data as determined is matched with address-data stored in recipient data-base 42, the recipient address determiner 20 stores address-data matched as a recipient address into the recipient data-base 42 at S212.

If address-data as determined is not matched with address-data stored in recipient data-base 42, at S214 the recipient address determiner 20 determines whether or not name-data as determined is matched with name-data stored in name database. The recipient address determiner 20 determines whether or not incompleteness of address-data is acceptable to determine an actual address from address-data.

If the recipient address determiner 20 determines that name-data as determined is matched with name-data stored in name database, and if the recipient address determiner 20 determines that incompleteness of address-data is acceptable to determine an actual address from address-data, then the process is going to S212 at which the recipient address determiner 20 stores address-data as address candidate in address candidate storage region.

If the incompleteness of address-data is unacceptable, the recipient address determiner 20 proceeds to S216. If the recipient address determiner 20 determines that name-data as determined is not matched with name-data stored in name database, or if the recipient address determiner 20 determines that incompleteness of address-data is unacceptable to determine an actual address from address-data, then the recipient address determiner 20 determines that the incompleteness of address-data be unacceptable, thereby proceeding to S216.

Next, at S216 the name registration determiner 24 adds name-data into recipient data-base 42. If it is determined add name-data into recipient data-base 42. If the name registration determiner 24 determined to add name-data into recipient data-base 42, then the process is going to S218, where the name-data register 26 associates the name with the address and registers the name associated with the address.

It should be noted that although a process flow is explained for the flowchart illustrated in FIG. 14 whereby the delivery processor 10A is implement both non-major customer processing as well as major customer processing, the delivery processor 10A may also be configured to only perform major customer processing.

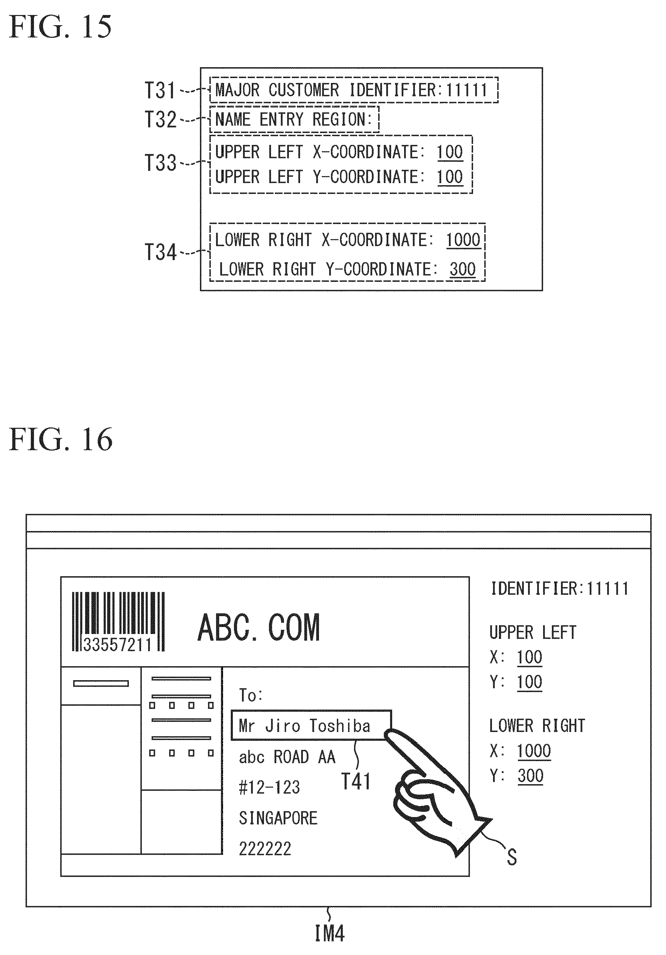

FIG. 15 is a diagram illustrating an example of displaying, in a terminal device, a region in which name or appellation information is stored in a major customer database 44. A major customer identifier T31, information T32 on a region name for indicating content to an operator, coordinate values T33 for indicating a starting point of a name region in an imaged label, and/or coordinate values T34 for indicating an endpoint of a name region in an imaged label may be mutually associated and stored in the major customer database 44. The maintainer 38 accepts changes to the content of the major customer database 44 while displaying the information illustrated in FIG. 15. The maintainer 38 may acquire coordinate values as text input to the terminal device 5, and exchange the newly acquired coordinate values for coordinates stored in the major customer database 44, thus changing the content of the major customer database 44.

The maintainer 38 may also change the content of the major customer database 44 based on operator actions input from a tablet terminal including a touch panel, for example. FIG. 16 is a diagram illustrating a state where coordinate values are changed using a tablet terminal. The tablet terminal (not shown) communicates with the delivery processor 10 through the network NW. The touch panel (not shown) of the tablet terminal may display an image IM4 of a major customer label imaged by the imager 6. An operator of the tablet terminal may set a rectangular shape region like that illustrated by a region T41 in FIG. 16 by sliding an indicator S on the touch panel from upper left to lower right, or from upper right to lower left. The operator of the tablet terminal may also set a rectangular shape region like that illustrated by the region T41 by swiping the indicator S from a center toward a corner via touch operations, thus specifying a desired region. The region set may be superimposed with an image on which a major customer label is shown.

The maintainer 38 sends instructions to the tablet terminal to display coordinate values corresponding to the region set at that point, and to display an identifier identifying a major client in real time. If the operator the tablet terminal performs a predefined operation differing from the region set, the selected region is imaged as a name region in which a name or appellation is described. In this case, the tablet terminal generates a signal corresponding to the operation and supplies the signal to the maintainer 38. When the maintainer 38 acquires a signal generated by the tablet terminal, the region corresponding to the acquired signal is registered in the major customer database 44 as a name region and associated with the major customer label. The maintainer 38 may also make the tablet terminal display, as an initial region, a region in which the name or appellation is written, wherein the region includes the name or appellation that has been recognized from the image. The operator of the tablet terminal may also select a name region by using a mouse, keyboard, or the like to manipulate an icon displayed in the display of the terminal device 5 instead of the tablet terminal.

The maintainer 38 may also change a processing program implemented by the major customer image determiner 30 or by the recipient-related information indicator region position specifier 32 based on information input by the terminal device 5. By using the maintainer 38 to change the content of the major customer database 44, and accept changes in processing programs, changes to a major customer label can be quickly followed.

In one or more embodiments explained above, a determination may be made as to whether or not an image acquired from the image inputter 12 shows an object P to be delivered from a major customer. If the object P to be delivered is from a major customer, an address and/or a name or appellation may be recognized within an address region obtained by reference information stored in the major customer database 44. Target locations for recognition can thus be whittled down, and an address and other information can be recognized quickly and accurately.

In one or more embodiments explained above, confirmation rate of the address on an object to be delivered can be increased by using the following configuration. The recognizer 14 or 16 recognizes information assigned to an object to be delivered, the information obtained by OCR processing of an image of the object to be delivered imaged by the imager 6. The first comparator 18 compares at least a part of an address contained in information recognized by the recognizer to at least a part of an address included in an address list stored in a memory, the comparator determining whether or not at least the part of the address is matched to the at least the part of the address included in the address list. The determiner 20 refers to information of at least a part of a name or appellation in a case that the comparator determined that at least the part of the address is not matched to at least the part of the address included in the address list. The determiner determines whether or not at least a part of the name or appellation, which is included in information recognized by the recognizer, is matched to at least a part of the name or appellation associated with the address included in the address list. The determiner determines that an address, which is associated with the name or appellation as matched, as a delivery address, in cases that the determiner determines that the at least the part of the name or appellation is matched to at least the part of the name or appellation associated with the address included in the address list.

One of more disclosed embodiments can be realized by a configuration described below. A delivery processor may include, but is not limited to: one or more software components; and one or more hardware processors that are, when executing one or more software components, configured to at least: recognize information containing an address, and containing a name or appellation, assigned to an object to be delivered, the information obtained by OCR processing of an image of the object to be delivered imaged by an imager; compare the address contained in the information recognized , and address list information stored in a memory; and determine, as a delivery address, an address associated with the recognized name or appellation for the object to be delivered, after referencing the address list information stored in the memory if the compared results do not show a match.

A delivery processor according to one or more disclosed embodiments is described above, but the disclosed embodiments are not limiting, and it is possible to freely make modifications, such as omitting, replacing, or changing constitutive elements, provided that such modifications do not deviate from the spirit of this disclosure. The scope of the following claims includes the embodiments described above, and modifications to the embodiments. The delivery processor can be implemented by circuitry, or a system of electric circuits to perform operations and functions described above.

The term "hardware processor" may be implemented by one or more hardware components. The hardware processor is configured to execute one or more software components and configured, when executing the one or more software components, to perform one or more acts or operations in accordance with codes or instructions included in the one or more software components.

The term "circuitry" refers to a system of circuits which is configured perform one or more acts or operations. The term "circuitry" is implemented by hardware and software components.

The terms "recipient-related information recognizer 16", "first comparator 18", "recipient address determiner 20", "name storing controller 22", "name registration determiner 24", "name-data register 26", "major customer image determiner 30" "recipient-related information indicator region position specifier 32" "major customer recipient-related information recognizer 34"and "second comparator 36" may be implemented by "circuitry", or by a combination of one or more "hardware processor" with one or more software components.
While certain embodiments processor have been described, these embodiments have been presented by way of example only, and are not intended to limit the scope of the inventions. Indeed, the novel: embodiments described herein may be embodied in a variety of other forms; furthermore, various omissions substitutions and changes in the form of the embodiments described herein may be made without departing from the spirit of the inventions. The accompanying claims and their equivalents are intended to cover such forms or modifications as would fall within the scope and spirit of the inventions.

## Claims

1. A delivery processor comprising:
a recognizer configured to recognize information assigned to an object to be delivered, the information obtained by OCR processing of an image of the object to be delivered imaged by an imager;
a comparator configured to compare at least a part of an address contained in information recognized by the recognizer to at least a part of an address included in an address list stored in a memory, the comparator being configured to determine whether or not at least the part of the address is matched to the at least the part of the address included in the address list; and
a determiner configured to refer to information of at least a part of a name or appellation in a case that the comparator determined that at least the part of the address is not matched to at least the part of the address included in the address list, the determiner being configured to determine whether or not at least a part of the name or appellation, which is included in information recognized by the recognizer, is matched to at least a part of the name or appellation associated with the address included in the address list, and the determiner being configured to determine as a delivery address, an address, which is associated with the name or appellation as matched, in cases that the determiner determines that the at least the part of the name or appellation is matched to at least the part of the name or appellation associated with the address included in the address list.

2. The delivery processor according to claim 1, further comprising:
a manager configured to associate the recognized name or appellation with an address contained in the address list and registers name associated with an address contained in the address list in a case that the manager determines that name-registration conditions relating to the recognized name or appellation have been satisfied.

3. The delivery processor according to claim 2,
wherein the manager is configured to make changes to the predefined conditions in accordance a request for change entered.

4. The delivery processor according to claim 1,
wherein the recognizer is configured to refer to an information list including at least one of characters, texts and symbols of a names or appellation;
wherein the recognizer is configured to refer to a list of highly misrecognized patterns that includes at least one of: 1) a highly misrecognized string of at least one of texts and symbols, 2) at least one highly misrecognized character, 3) at least one highly misrecognized text; and 4) at least one highly misrecognized symbol, the highly misrecognized pattern being associated with a names or appellation; and
wherein the recognizer is configured to change the recognized one of characters, texts, symbols and strings of the characters, texts, and symbols into the names or appellation associated with the highly misrecognized pattern if the recognizer at least recognized that one of string, character, text, and symbol is identical to the highly misrecognized pattern.

5. The delivery processor according to claim 4, further comprising:
a second manager configured to newly adds, based on an association relationship between an address and at least one of misrecognized strings, characters, texts, and symbols, a new highly misrecognized pattern into the list of highly misrecognized patterns, in a case that it has been determined plural times that the address is associated with the misrecognized one of characters, texts, symbols and strings of the characters, texts, and symbols.

6. The delivery processor according to any one of claims 1 through 5, further comprising:
a specifier configured to refer to a specified supplemental information including an identifier and a position in a label of a destination information, the position being associated with the identifier, the identifier identifying that a sender of the object to be delivered is a specified sender,
wherein the recognizer is configured to recognize the identifier that has been imaged by the imager;
wherein the specifier is configured to specify the position associated with the identifier; and
wherein the recognizer is configured to recognize an address of a destination of the destination information at the position specified.

7. The delivery processor according to claim 6, wherein:
wherein the identifier includes at least one of:
a) text information;
b) information encoded in a linear or two-dimensional barcode;
c) information indicating a format of a label in which information including an address is described; and
d) symbol information.

8. The delivery processor according to claim 6 or claims 7, further comprising:
a maintainer configured to make at least one of:
changing position or size of the region corresponding to the specified supplemental information;
adding specifying information into the specified supplemental information; and
deleting specifying information from the specified supplemental information.

9. A delivery processor comprising:
a recognizer configured to recognize information assigned to an object to be delivered, the information obtained by OCR processing of an image of the object to be delivered imaged by an imager;
a comparator configured to compare at least a part of an address contained in information recognized by the recognizer to at least a part of an address included in an address list stored in a memory, the comparator being configured to determine whether or not at least the part of the address is matched to the at least the part of the address included in the address list; and
a determiner configured to refer to information of at least a part of a name or appellation in a case that the comparator determined that the at least the part of the address is not matched to the at least the part of the address included in the address list,
the determiner configured to determine whether or not at least a part of the name or appellation, which is included in information recognized by the recognizer, is matched to at least a part of the name or appellation associated with the address included in the address list, and
the determiner configured to determine whether or not an address recognized by the recognizer is imperfect and compensable with an address associated with the name or appellation matched at least in part with the at least the part of the name or appellation associated with the address included in the address list,
the determiner configured to compensate the address recognized with the address associated with the name or appellation, and
the determiner configured to determine that the address compensated as a delivery address.

10. A non-transitory computer-readable storage medium that stores a computer program to be executed by a computer to perform at least:
recognize that recognizes information assigned to an object to be delivered, the information obtained by OCR processing of an image of the object to be delivered imaged;
compare at least a part of an address contained in information recognized to at least a part of an address included in an address list,
determine whether or not at least the part of the address is matched to the at least the part of the address included in the address list; and
refer to information of at least a part of a name or appellation in a case that at least the part of the address is not matched to at least the part of the address included in the address list,
determine whether or not at least a part of the name or appellation, which is included in information recognized, is matched to at least a part of the name or appellation associated with the address included in the address list, and
determine that an address, which is associated with the name or appellation as matched, as a delivery address, in cases that the at least the part of the name or appellation is matched to at least the part of the name or appellation associated with the address included in the address list.
